(19) Europäisches Patentamt
European Patent Office
Office européen des brevets

(11) Publication number : **0 672 717 A1**

# (12) EUROPEAN PATENT APPLICATION

(21) Application number : **95301685.4**

(51) Int. Cl.$^6$ : **C08K 5/523**

(22) Date of filing : **14.03.95**

(30) Priority : **14.03.94 JP 42881/94**
**29.08.94 JP 204044/94**

(43) Date of publication of application :
**20.09.95 Bulletin 95/38**

(84) Designated Contracting States :
**DE FR GB IT**

(71) Applicant : **TORAY INDUSTRIES, INC.**
**2-1, Nihonbashi-Muromachi 2-chome**
**Chuo-ku**
**Tokyo 103 (JP)**

(72) Inventor : **Okita, Shigeru**
**12-28, Sonoyama 2-chome**
**Otsu-shi, Shiga, 520 (JP)**
Inventor : **Matsuoka, Hideo**
**1-81, Ikegamidai,**
**Midori-ku**
**Nagoya-shi, Aichi,458 (JP)**
Inventor : **Nishimura, Toru**
**1-18, Ikegamidai,**
**Midori-ku**
**Nagoya-shi, Aichi, 458 (JP)**

(74) Representative : **Coleiro, Raymond et al**
**MEWBURN ELLIS**
**York House**
**23 Kingsway**
**London WC2B 6HP (GB)**

## (54) Flame-retardant polymer composition and shaped article thereof.

(57) A flame-retardant thermoplastic polymer composition has incorporated therein a flame retarder of the formula :

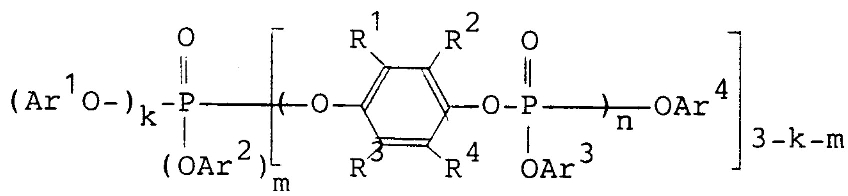

wherein $R^1$, $R^2$, $R^3$ and $R^4$ are H or lower alkyl, $Ar^1$, $Ar^2$, $Ar^3$ and $Ar^4$ are unsubstituted or substituted phenyl, n is a number of 0.5 to 3,000, and each of k and m is an integer of 0 to 2 and k plus m is an integer of 0 to 2. The polymer composition preferably further comprises a salt of a specific triazine derivative with cyanuric acid or isocyanuric acid. A shaped article made of the polymer composition has good flame retardancy, mechanical properties and resistance to hydrolysis.

EP 0 672 717 A1

Jouve, 18, rue Saint-Denis, 75001 PARIS

This invention relates to a flame-retardant polymer composition containing a non-halogen flame retarder, and a shaped article thereof.

The shaped articles of the flame-retardant polymer composition of the present invention have good mechanical properties and a good hydrolysis resistance, and are useful for electrical parts and electronic parts, such as a connector, a relay, a switch, a case part, a transducer part and a coil bobbin, automobile parts, and mechanical parts.

Thermoplastic polymers including polyesters such as polyethylene terephthalate, polybutylene terephthalate, polyethylene naphthalate and polycyclohexanedimethylene terephthalate, polycarbonates, polyamides and polyphenylene oxides have good properties, and thus, injection molded articles thereof are widely used as, for example, mechanical parts, electrical parts and automobile parts. Since these thermoplastic polymers are essentially combustible, where they are used as industrial materials, safety against flames, i.e., flame-retardancy, as well as good and balanced general chemical and physical properties, are often required.

To impart a flame retardancy to a thermoplastic polymer, a method of compounding a halogen-containing organic compound as a flame retarder and a antimony-containing compound with the thermoplastic polymer is generally employed. However, this method has a problem in that, when burnt, it produces a large quantity of smoke.

Therefore, to obviate the problem encountered by the use of a halogen-containing retarder, in recent years there has been an increasing demand for a non-halogen flame retarder.

Attempts to copolymerize or blend a phosphorus-containing compound for imparting a flame retardancy to a thermoplastic polymer without the use of a halogen-containing flame retarder have heretofore been made, especially for textile materials. For example, as attempts for rendering thermoplastic polyesters flame-retardant, there have been proposed a method of introducing phosphonic acid units or phosphinic acid units in a polyester by copolymerization (JP-A-51-54691 and JP-A-50-56488); a method of copolymerizing a monomer having a cyclic phosphinite skeleton as a pendant with polyester-forming monomers (JP-A-52-98089, JP-A-55-5916 and JP-A-60-240755); a method of blending a polyphosphonate with a thermoplastic polyester (US-A-3719727); and a method of blending red phosphorus with a thermoplastic polyester (JP-A-49-74240). Of these documents, JP-A-55-5916 and JP-A-49-74240 refer to injection molding of the flame-retardant polyester compositions. However, most of the prior art for rendering a thermoplastic polyester flame-retardant by using conventional phosphorus compounds is concerned with flame retardation not of a film, a sheet or other shaped articles, but of textile materials.

Furthermore, a method for rendering a thermoplastic polyester flame-retardant has been proposed wherein an aromatic phosphate or an aromatic phosphate oligomer is incorporated in a polyester (JP-A-48-90348, JP-A-48-91147 and JP-A-52-102255). This method also is intended to render a textile materials flame-retardant.

Moreover, methods have been proposed in which a resorcin-type aromatic phosphate oligomer is incorporated in a shaped article of a polybutylene terephthalate (PBT) alloy (EP-A-0491986) and in which a resorcin-type aromatic bisphosphate, melamine cyanurate and an inorganic filler are incorporated in a polyalkylene terephthalate (JP-A-5-70671).

It is desired that flame-retardant polymer compositions used for injection molded articles, films and sheets have good mechanical properties, and further good heat resistance and resistance to hydrolysis so that these articles can withstand high-temperature and high-humidity conditions with a high reliability. From this viewpoint, it is seen that with the previously proposed methods for imparting a flame retardancy to thermoplastic polymers the following problems arise.

(1) In the method of introducing phosphonic acid units or phosphinic acid units in a polyester by copolymerization, the P(=O)-O bonds introduced in the backbone structure are subject to hydrolysis, and thus, the resulting copolyester has a poor resistance to hydrolysis.

(2) In the method of copolymerizing a phosphorus-containing monomer, especially with polyester-forming monomers, a salient amount of the phosphorus-containing monomer must be copolymerized for obtaining copolyesters having a desired high level of flame retardancy required for electrical parts or electronic parts. This leads to drastic reduction in the melting point of polymer and the rate of crystallization thereof, and the resulting polymer is extremely restricted for use in injection molding.

(3) The method of blending red phosphorus in a thermoplastic polymer results in reduction of the mechanical properties and in discoloration, and the flame retardant effect is only to a slight extent.

(4) In the method of incorporating a resorcin-type aromatic phosphate or a resorcin-type aromatic phosphate oligomer in a polymer, the phosphate or oligomer is subject to hydrolysis and the hydrolyzed product catalytically activates the hydrolysis reaction of the polymer, and thus, the durability of the polymer is reduced. Further, in shaped articles made of a polymer composition having incorporated therein the resorcin-type aromatic phosphate or the resorcin-type aromatic phosphate oligomer, bleeding of these flame retarders occurs.

To sum up, with the methods previously proposed for flame retardation of textile materials difficulties are encountered when these methods are employed for flame retardation of sheets, films and molded articles. Even in the method of incorporating a resorcin-type aromatic phosphate oligomer or a resorcin-type aromatic phosphate in shaped articles other than textile materials, the above-mentioned problems arise.

In view of the above, the present invention seeks to provide a flame retardant thermoplastic polymer composition having incorporated therein a nonhalogen flame retarder, which exhibits an enhanced flame retardancy and a good shapability, and films, sheets and other shaped articles made from which have good mechanical properties and resistance to hydrolysis.

The present invention also seeks to provide a shaped article exhibiting good mechanical properties, meltflowability, surface appearance and resistance to hydrolysis, as well as good flame retardancy, which is made from the above-mentioned flame retardant thermoplastic polymer composition.

Still further, the present invention seeks to provide a flame retardant thermoplastic polymer composition and a shaped article made therefrom, which are useful for mechanical parts, electrical and electronic parts and automobile parts.

It now has been found surprisingly that solutions to the above-mentioned problems can be achieved by incorporating a specific flame retarder in a thermoplastic polymer, which retarder is a hydroquinone-type aromatic oligophosphate or polyphosphate having a specific degree of polymerization, and which has excellent and balanced performances.

Thus, according to one aspect of the present invention, there is provided a flame-retardant polymer composition comprising a thermoplastic polymer and a flame retarder having a chemical structure represented by the following formula (1):

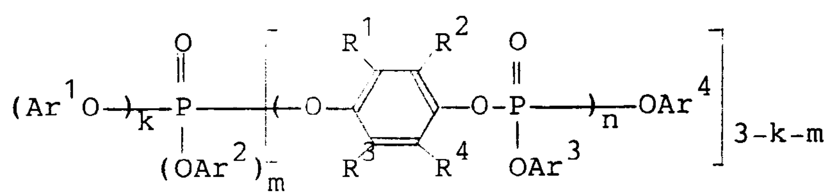

(1)

wherein $R^1$, $R^2$, $R^3$ and $R^4$ independently represent a hydrogen atom or an alkyl group having 1 to 5 carbon atoms, $Ar^1$, $Ar^2$, $Ar^3$ and $Ar^4$ independently represent a phenyl group or a phenyl group having an organic residue substituent containing no halogen, n is a number average degree of polymerization and in the range of 0.5 to 3,000, and each of k and m is from 0 to 2 and the sum of k and m is in the range of 0 to 2. Thus, each of k and m may, independently of one another be 0 or an integer of 1 or 2 and the sum of k and m may also be 0 or an integer of 1 or 2.

According to another aspect of the present invention, there is provided a flame-retardant polymer composition comprising a thermoplastic polymer, the above-mentioned flame retarder having a chemical structure represented by the formula (1), and a salt of a triazine derivative represented by the formula (3):

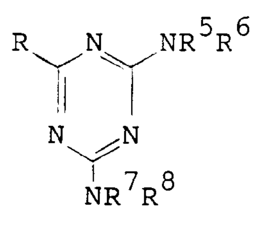

(3)

with at least one acid selected from cyanuric acid and isocyanuric acid; wherein $R^5$, $R^6$, $R^7$ and $R^8$ independently represent a hydrogen atom, an aryl, alkyl, aralkyl or cycloalkyl group, or $-CONH_2$; and R represents the same group as $-NR^5R^6$ or $-NR^7R^8$, or independently represents a hydrogen atom, an aryl, alkyl, aralkyl or cycloalkyl group, or $-NH_2$ or $-CONH_2$.

According to still another aspect of the present invention, there is provided a shaped article made of a flame-retardant polymer composition comprising a thermoplastic polymer and the above-mentioned flame retarder having a chemical structure represented by the formula (1).

The thermoplastic polymer to which flame retardancy is imparted by the incorporation of the above-mentioned flame retarder in the present invention is a polymeric material exhibiting, when heated, a fluidity and thus capable of being shaped and processed in a heated state. As specific examples of the thermoplastic polymer, there can be mentioned polyesters, polycarbonates, polyamides, polyphenylene oxides, modified polyphenylene oxides, phenoxy resins, polyphenylene sulfides, polyolefins such as polyethylene and polypropylene, polyolefin copolymers such as an ethylene/propylene copolymer, an ethylene/1-butene copolymer, an ethylene/propylene/non-conjugated diene copolymer, an ethylene/ethyl acrylate copolymer, an ethylene/glycidyl methacrylate copolymer, an ethylene/vinyl acetate/glycidyl methacrylate copolymer and an ethylene/propylene-g-maleic anhydride copolymer, and elastomers such as a polyesterether elastomer and a polyesterpolyester elastomer. These thermoplastic polymers may be used either alone or in combination. Of these thermoplastic polymers, thermoplastic polyesters and mixtures of a thermoplastic polyester and at least one thermoplastic polymers selected from phenoxy resins, polyphenylene oxides, modified polyphenylene oxides and polyphenylene sulfides are preferable.

As specific examples of the thermoplastic polyesters, there can be mentioned polyethylene terephthalate, polypropylene terephthalate, polybutylene terephthalate, polyethylene naphthalate, polybutylene naphthalate, polycyclohexanedimethylene terephthalate and polyethylene-1,2-bis(phenoxy)ethane-4,4'-dicarboxylate; and thermoplastic copolyesters such as polyethylene isophthalate/terephthalate, polybutylene terephthalate/isophthalate, polybutylene terephthalate/decanedicarboxylate and polycyclohexanedimethylene terephthalate/isophthalate. Of these thermoplastic polyesters, polybutylene terephthalate, polybutylene naphthalate, polycyclohexanedimethylene terephthalate, polyethylene naphthalate and polyethylene terephthalate are preferable because they provide good and balanced mechanical properties and shapabily. In the mixtures of a thermoplastic polyester and at least one thermoplastic polymer selected from phenoxy resins, polyphenylene oxides, modified polyphenylene oxides and polyphenylene sulfides, the proportion of the thermoplastic polyester to the other thermoplastic polymer or polymers is preferably in the range of 100/200 to 100/5 by weight.

In the present invention, a hydroquinone-type aromatic oligophosphate or polyphosphate having a chemical structure represented by the formula (1) is used as a flame retarder. In the formula (1), each of k and m may be 0, 1 or 2, preferably 0 or 1, and more preferably 1, and the sum of k plus m is 0, 1 or 2. This hydroquinone-type aromatic oligophosphate or polyphosphate has a number average degree (n) of polymerization of 0.5 to 3,000, preferably 0.5 to 500. In view of flame retardancy, n is most preferably in the range of 1 to 2.5 or the range of 6 to 100.

In the formula (1), $R^1$, $R^2$, $R^3$ and $R^4$ independently represent a hydrogen atom or an alkyl group having 1 to 5 carbon atoms. As examples of the alkyl group, there can be mentioned methyl, ethyl, n-propyl, isopropyl, n-butyl, sec.-butyl, tert.-butyl, n-pentyl, 2-pentyl, 3-pentyl and neopentyl groups. A hydrogen atom and methyl and ethyl groups are preferable. A hydrogen atom is most preferable. $Ar^1$, $Ar^2$, $Ar^3$ and $Ar^4$ independently represent a phenyl group or a phenyl group having an organic residue substituent containing no halogen. As specific examples of $Ar^1$, $Ar^2$, $Ar^3$ and $Ar^4$, there can be mentioned phenyl, tolyl, xylyl, mesityl, cumenyl, naphthyl, indenyl and anthryl groups. Of these, phenyl, tolyl, xylyl, cumenyl and naphthyl groups are preferable. Phenyl, tolyl and xylyl groups are more preferable.

The hydroquinone-type aromatic oligophosphate or polyphosphate of the formula (1) is generally produced by processes represented by the following reaction formula (4) or (5).

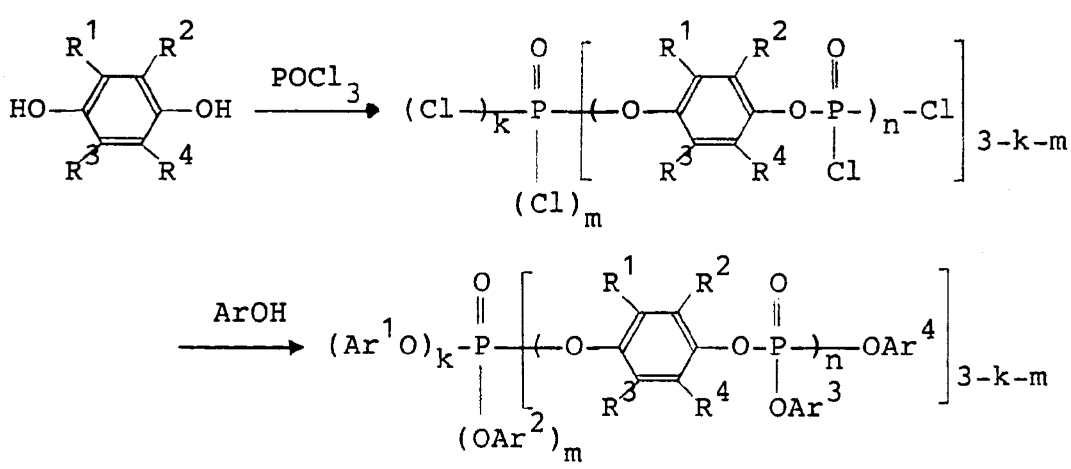


(4)

$ArOH = Ar^1OH,\ Ar^2OH,\ Ar^3OH,\ Ar^4OH$

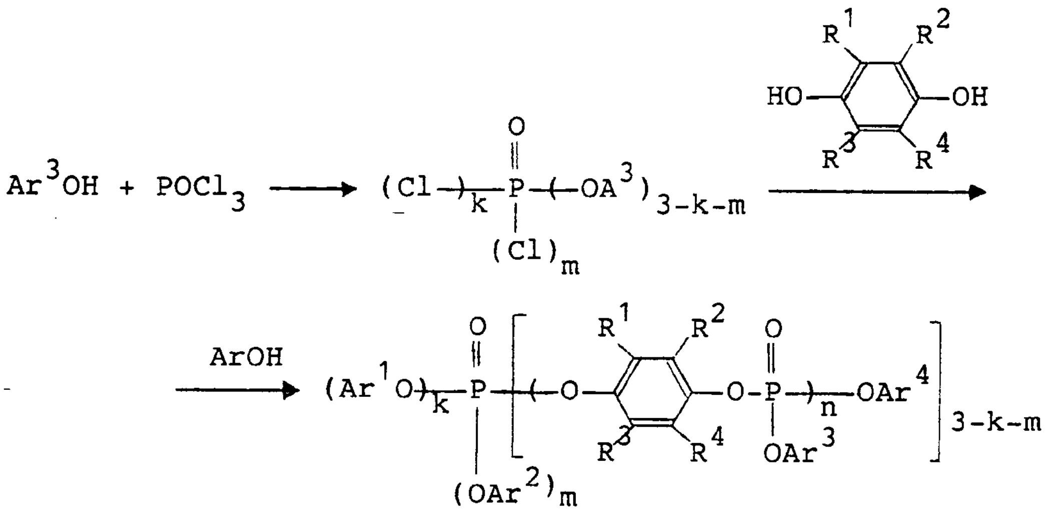


(5)

$$ArOH = Ar^1OH,\ Ar^2OH,\ Ar^4OH$$

Where the aromatic oligophosphate or polyphosphate of the formula (1) is made according to the reaction formula (4) or (5), it is possible that low-molecular-weight monophosphates such as a triaryl phosphate are produced as by-products. However, the formation of such by-products offers no problem provided that the resulting phosphate mixture has an average degree of polymerization of at least 0.5.

As specific examples of the aromatic oligophosphate and the aromatic polyphosphate, there can be mentioned those which are listed in Tables 1-1 and 1-2. However, the aromatic oligophosphate and the aromatic polyphosphate used in the present invention are not restricted to these compounds.

Table 1-1

| No. | $R^1$ | $R^2$ | $R^3$ | $R^4$ | $Ar^1$ | $Ar^2$ | $Ar^3$ | $Ar^4$ | k | m | 3-k-m |
|---|---|---|---|---|---|---|---|---|---|---|---|
| 1 | H | H | H | H | Ph | Ph | Ph | Ph | 1 | 1 | 1 |
| 2 | Me | H | H | H | Ph | Ph | Ph | Ph | 1 | 1 | 1 |
| 3 | Me | Me | H | H | Ph | Ph | Ph | Ph | 1 | 1 | 1 |
| 4 | Me | Me | Me | H | Ph | Ph | Ph | Ph | 1 | 1 | 1 |
| 5 | Me | Me | Me | Me | Ph | Ph | Ph | Ph | 1 | 1 | 1 |
| 6 | Et | H | H | H | Ph | Ph | Ph | Ph | 1 | 1 | 1 |
| 7 | Pr | H | H | H | Ph | Ph | Ph | Ph | 1 | 1 | 1 |
| 8 | Bu | H | H | H | Ph | Ph | Ph | Ph | 1 | 1 | 1 |
| 9 | Pe | H | H | H | Ph | Ph | Ph | Ph | 1 | 1 | 1 |
| 10 | H | H | H | H | To | To | To | To | 1 | 1 | 1 |
| 11 | Me | H | H | H | To | To | To | To | 1 | 1 | 1 |
| 12 | Me | H | H | Me | To | To | To | To | 1 | 1 | 1 |
| 13 | Me | Me | Me | H | To | To | To | To | 1 | 1 | 1 |
| 14 | Me | Me | Me | Me | To | To | To | To | 1 | 1 | 1 |
| 15 | Et | H | H | H | To | To | To | To | 1 | 1 | 1 |
| 16 | Pr | H | H | H | To | To | To | To | 1 | 1 | 1 |
| 17 | Bu | H | H | H | To | To | To | To | 1 | 1 | 1 |
| 18 | Pe | H | H | H | To | To | To | To | 1 | 1 | 1 |
| 19 | H | H | H | H | Xy | Xy | Xy | Xy | 1 | 1 | 1 |
| 20 | Me | H | H | H | Xy | Xy | Xy | Xy | 1 | 1 | 1 |

Table 1-2

| No. | $R^1$ | $R^2$ | $R^3$ | $R^4$ | $Ar^1$ | $Ar^2$ | $Ar^3$ | $Ar^4$ | k | m | 3-k-m |
|---|---|---|---|---|---|---|---|---|---|---|---|
| 21 | Me | H | H | Me | Xy | Xy | Xy | Xy | 1 | 1 | 1 |
| 22 | Me | Me | Me | H | Xy | Xy | Xy | Xy | 1 | 1 | 1 |
| 23 | Me | Me | Me | Me | Xy | Xy | Xy | Xy | 1 | 1 | 1 |
| 24 | Et | H | H | H | Xy | Xy | Xy | Xy | 1 | 1 | 1 |
| 25 | Pr | H | H | H | Xy | Xy | Xy | Xy | 1 | 1 | 1 |
| 26 | Bu | H | H | H | Xy | Xy | Xy | Xy | 1 | 1 | 1 |
| 27 | Pt | H | H | H | Xy | Xy | Xy | Xy | 1 | 1 | 1 |
| 28 | H | H | H | H | Ph | Xy | Xy | Ph | 1 | 1 | 1 |
| 29 | Me | H | H | H | Ph | To | To | Ph | 1 | 1 | 1 |
| 30 | Me | H | H | Me | To | Ph | Xy | Ph | 1 | 1 | 1 |
| 31 | Me | Me | H | Me | Ph | Ph | Xy | Xy | 1 | 1 | 1 |
| 32 | Me | Me | Me | Me | To | Ph | Ph | Ph | 1 | 1 | 1 |
| 33 | Et | H | H | H | Ph | To | To | Ph | 1 | 1 | 1 |
| 34 | Pr | H | H | H | Ph | To | To | Ph | 1 | 1 | 1 |
| 35 | Bu | H | H | H | Xy | To | To | Xy | 1 | 1 | 1 |
| 36 | Pe | H | H | H | To | Xy | Ph | Xy | 1 | 1 | 1 |
| 37 | Pr | H | H | Me | Ph | Ph | Ph | Ph | 1 | 1 | 1 |
| 38 | Bu | Me | H | H | To | To | To | To | 1 | 1 | 1 |
| 39 | Pr | H | Et | H | To | Ph | Ph | Xy | 1 | 1 | 1 |
| 40 | Bu | H | Me | H | To | Xy | Ph | To | 1 | 1 | 1 |
| 41 | Pr | H | H | Me | Ph | Ph | Ph | Ph | 1 | 1 | 1 |
| 42 | H<br>Me | H<br>H | H<br>H | H<br>H | - | Xy | Xy<br>Ph | Xy<br>Ph | 0 | 1 | 2 |
| 43 | H<br>H<br>H | H<br>H<br>H | H<br>H<br>H | H<br>H<br>H | - | - | Xy<br>Xy<br>Xy | Xy<br>Xy<br>Xy | 0 | 0 | 3 |
| 44 | H<br>H<br>H | H<br>H<br>H | H<br>H<br>H | H<br>H<br>H | - | - | Ph<br>Ph<br>Ph | Ph<br>Ph<br>Ph | 0 | 0 | 3 |

Abbreviations

for $R^1$, $R^2$, $R^3$ and $R^4$:
H = hydrogen
Me = methyl
Et = ethyl
Bu = butyl
Pt = pentyl

For $Ar^1$, $Ar^2$, $Ar^3$ and $Ar^4$:
Ph = phenyl
To = tolyl
Xy = xylyl

Of the above-mentioned aromatic oligophosphates and aromatic polyphosphates, those in which $Ar^1$, $Ar^2$, $Ar^3$ and $Ar^4$ independently represent a phenyl, tolyl or xylyl group and each of k and m is an integer of 1 is preferable, and, those which are represented by the following formula (2) are more preferable in view of the flame

retardancy, mechanical properties and economic factor.

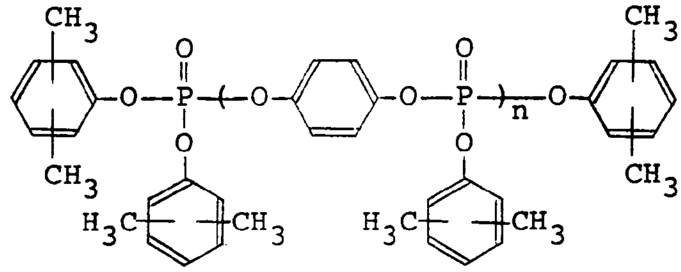

(2)

The amount of the aromatic oligophosphate or the aromatic polyphosphate in the flame retardant polymer composition of the present invention is in the range of 0.5 to 100 parts by weight, preferably 1 to 80 parts by weight and more preferably 5 to 50 parts by weight, per 100 parts by weight of a thermoplastic polymer.

The flame retardancy of the polymer composition depends upon the amount of phosphorus contained therein. Therefore, where an aromatic oligophosphate or polyphosphate having a high phosphorus content is incorporated, the intended high retardancy can be obtained with a small amount of the aromatic oligophosphate or polyphosphate. In contrast, where an aromatic oligophosphate or polyphosphate having a low phosphorus content is incorporated, a large amount of the aromatic oligophosphate or polyphosphate must be incorporated for obtaining the intended high flame retardancy. The content of phosphorus in the polymer composition, which is required for obtaining the high flame retardancy, is usually in the range of 0.1 to 10% by weight, preferably 0.2 to 8% by weight and more preferably 0.5 to 5% by weight, based on the weight of the composition.

By further incorporating a salt of a triazine derivative represented by the following formula (3) with cyanuric acid and/or isocyanuric acid, in the polymer composition having incorporated therein the above-mentioned aromatic oligophosphate or polyphosphate, the flame retardancy of the polymer composition can be more enhanced.

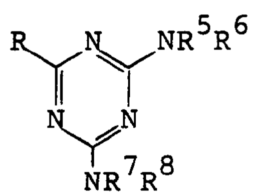

(3)

wherein $R^5$, $R^6$, $R^7$ and $R^8$ independently represent a hydrogen atom, an aryl, alkyl, aralkyl or cycloalkyl group, or $-CONH_2$; and R represents the same group as $-NR^5R^6$ or $-NR^7R^8$, or independently represents a hydrogen atom, an aryl, alkyl, aralkyl or cycloalkyl group, or $-NH_2$ or $-CONH_2$.

In the salt of a triazine derivative of the formula (3) with cyanuric acid or isocyanuric acid, the ratio of the triazine derivative to cyanuric acid or isocyanuric acid is usually 1/1 by mole, and occasionally 1/2 by mole. It is to be noted that, among triazine derivatives represented by the formula (3), those which are incapable of reacting with cyanuric acid or isocyanuric acid cannot be used.

In the formula (3), $R^5$, $R^6$, $R^7$ and $R^8$ independently represent a hydrogen atom, an aryl, alkyl, aralkyl or cycloalkyl group, or $-CONH_2$. As the aryl, alkyl, aralkyl or cycloalkyl group, an aryl group having 6 to 15 carbon atoms, an alkyl group having 1 to 10 carbon atoms, an aralkyl group having 7 to 16 carbon atoms and a cycloalkyl group having 4 to 15 carbon atoms, respectively, are preferable. R represents the same group as $-NR^5R^6$ or $-NR^7R^8$, or independently represents a hydrogen atom, an aryl, alkyl, aralkyl or cycloalkyl group, or $-NH_2$ or $-CONH_2$. As the aryl, alkyl, aralkyl or cycloalkyl group, an aryl group having 6 to 15 carbon atoms, an alkyl group having 1 to 10 carbon atoms, an aralkyl group having 7 to 16 carbon atoms and a cycloalkyl group having 4 to 15 carbon atoms, respectively, are preferable.

As specific examples of $R^5$, $R^6$, $R^7$ and $R^8$, there can be mentioned a hydrogen atom, and phenyl, p-tolyl, α-naphthyl, β-naphthyl, methyl, ethyl, n-propyl, isopropyl, n-butyl, sec-butyl, tert-butyl, hydroxymethyl, methoxymethyl, benzyl, cyclopentyl, cyclohexyl, cycloheptyl, 2-methyl-1-pentyl, 4-methyl-1-cyclohexyl and amide groups. Of these, a hydrogen atom, and phenyl, methyl, hydroxymethyl, methoxymethyl, benzyl and amide groups are preferable.

As specific examples of R, there can be mentioned a hydrogen atom, and amino, amide, methylamino, dimethylamino, ethylamino, diethylamino, mono(hydroxymethyl)amino, di(hydroxymethyl)amino,

mono(methoxymethyl)amino, di(methoxymethyl)amino, phenylamino, diphenylamino, phenyl, p-tolyl, α-naphthyl, β-naphthyl, methyl, ethyl, n-propyl, isopropyl, n-butyl, sec-butyl, tert-butyl, benzyl, cyclopentyl, cyclohexyl, cycloheptyl, 2-methyl-1-pentyl and 4-methyl-1-cyclohexyl groups. Of these, a hydrogen atom, and amino, amide, methyl, mono(hydroxymethyl)amino, di(hydroxymethyl)amino, mono(methoxymethyl)amino, di(methoxymethyl)amino, phenyl and benzyl groups are preferable.

As preferable examples of the triazine derivative of the formula (3), there can be mentioned melamine, benzoguanamine, acetoguanamine, 2-amide-4,6-diamino-1,3,5-triazine, mono(hydroxymethyl)melamine, di(hydroxymethyl)melamine and tri(hydroxymethyl)melamine. Of these, melamine, benzoguanamine and acetoguanamine are more preferable.

The salt of a triazine derivative of the formula (3) with cyanuric acid and/or isocyanuric acid may be a powder obtained by a process wherein a mixture of a triazine derivative of the formula (3) with cyanuric acid and/or isocyanuric acid is dispersed in water to prepare an aqueous slurry, the components of the slurry is thoroughly mixed together to obtain a uniform slurry of finely divided particles, the slurry is filtered and then dried. Thus, this salt is not a mere mixture of the triazine derivative with cyanuric acid and/or isocyanuric acid. The salt used in the present invention is not necessarily a complete salt and may contain unreacted triazine derivative, cyanuric acid and/or isocyanuric acid.

The form of the salt used is not particularly limited, but the salt is preferably in a finely divided particulate form because shaped articles made from the polymer composition have good mechanical strengths and surface appearance. Further, in view of the flame retardancy and mechanical properties, the smaller the average particle diameter of the salt in the polymer composition, the better the salt. More specifically the salt preferably has an average particle diameter not larger than 100 μm. Where the salt used has a poor dispersibility, a dispersing agent such as tris(β-hydroxyethyl)isocyanurate may be used.

In view of the flame retardancy, mechanical properties and surface appearance of shaped articles, the amount of the above-mentioned salt incorporated in the polymer composition of the present invention may be in the range of 0.5 to 100 parts by weight, preferably 2 to 80 parts by weight, and more preferably 3 to 70 parts by weight, per 100 parts by weight of a thermoplastic polymer.

A fluoropolymer may be further incorporated in the flame-retardant polymer composition of the present invention. By the incorporation of a fluoropolymer, undesirable dripping of molten polymer as usually observed when burnt can be minimized. As preferable examples of the fluoropolymer, there can be mentioned polytetrafluoroethylene, polyhexafluoropropylene, a tetrafluoroethylene/hexafluoropropylene copolymer, a tetrafluoroethylene/perfluoroalkyl-vinyl-ether copolymer, a tetrafluoroethylene/ethylene copolymer, a hexafluoropropylene/propylene copolymer, polyvinylidene fluoride and a vinylidene fluoride/ethylene copolymer. Of these, polytetrafluoroethylene, a tetrafluoroethylene/perfluoroalkylvinyl-ether copolymer, a tetrafluoroethylene/hexafluoropropylene copolymer, a tetrafluoroethylene/ethylene copolymer and polyvinylidene fluoride are especially preferable. Polytetrafluoroethylene and a tetrafluoroethylene/ethylene copolymer are most preferable.

The amount of the fluoropolymer optionally added is usually in the range of 0.01 to 10 parts by weight, preferably 0.1 to 5 parts by weight and more preferably 0.2 to 3 parts by weight, per 100 parts by weight of the thermoplastic polymer, in view of the mechanical properties and shapability.

The dripping-suppressing effect by the incorporation of the fluoropolymer is prominent foracombinationofa thermoplastic polyester with at least one resin selected from a phenoxy resin, a polyphenylene oxide, a modified polyphenylene oxide and a polyphenylene sulfide.

The aromatic oligophosphate and aromatic polyphosphate flame retarder used in the present invention promotes hydrolysis of a thermoplastic polymer having a structure prepared by dehydrating polycondensation, such as an ester linkage, only to a very slight extent. This is in contrast to the conventional phosphorus-containing flame retarder. However, where a hindered phenol stabilizer is incorporated in the flame-retardant polymer composition, the good resistance to hydrolysis can be maintained even when the polymer composition is exposed to a high-temperature for a long time.

As specific examples of the hindered phenol stabilizer, there can be mentioned triethyleneglycol-bis[3-(3-tert-butyl-5-methyl-4-hydroxyphenyl)propionate], 1,6-hexanediol-bis[3-(3,5-di-tert-butyl-4-hydroxyphenyl)propionate], pentaerythrityl-tetrakis[3-(3,5-di-tert-butyl-4-hydroxyphenyl)propionate], 2,2-thio-diethylenebis-[3-(3,5-di-tert-butyl-4-hydroxyphenyl)propionate, octadecyl-3-(3,5-di-tert-butyl-4-hydroxyphenyl)propionate, diethyl 3,5-di-tert-butyl-4-hydroxybenzylphophonate, 1,3,5-trimethyl-2,4,6-tris(3,5-di-tert-butyl-4-hydroxybenzyl)benzene, bis- or tris-(3-tert-butyl-6-methyl-4-hydroxyphenyl)propane, N,N'-hexamethylenebis(3,5-di-tert-butyl-4-hydroxy-hydrocinnamamide and N,N'-trimethylenebis(3,5-di-tert-butyl-4-hydroxyhydrocinnamamide.

The amount of the optional hindered phenol stabilizer incorporated in the flame-retardant polymer composition is usually 0.01 to 3 parts by weight, preferably 0.01 to 1 part by weight, and more preferably 0.03 to 0.5 part by weight, per 100 parts by weight of the thermoplastic polymer.

One or more other additives can be incorporated in the flame-retardant polymer composition, in an amount such that the intended object of the present invention is achieved. Such additives include, for example, phosphorus- or sulfur-containing antioxidants, heat-stabilizers, ultraviolet absorbers, lubricants, releasing agents, and colorants including pigments and dyes.

If desired, fibrous and/or particulate fillers are added into the flame-retardant polymer composition of the present invention to drastically enhance the strength, rigidity and heat resistance. Such fillers include, for example, glass fiber, carbon fiber, metal fiber, aramid fiber, asbestos, potassium titanate whisker, wollastonite, glass flakes, glass beads, talc, mica, clay, calcium carbonate, barium sulfate, titanium oxide and aluminum oxide. Chopped strands of glass fiber are especially preferable. The amount of these fillers is preferably in the range of 5 to 140 parts by weight, more preferably 5 to 100 parts by weight, per 100 parts by weight of the thermoplastic polymer.

The flame-retardant polymer composition of the present invention may be produced by a conventional process. For example, there can be mentioned a process wherein a thermoplastic polymer, an aromatic oligophosphate and/or aromatic polyphosphate and other additives are mixed in a molten state by an extruder, and a process wherein these components are uniformly mixed mechanically in a particulate form, and the mixture is then further mixed together and simultaneously shaped into a shaped article by a molding machine or other shaping machines.

The flame-retardant polymer composition of the present invention can be shaped into various shaped articles such as a molded article, a sheet and a film by a conventional shaping means such as injection molding, extrusion molding and compression molding. Of these, injection molding is advantageously used for the polymer composition of the present invention. The shaped articles are useful as mechanical parts, electrical and electronic parts and automobile parts.

Embodiments of the invention will now be specifically described by the following examples wherein all "parts" are by weight. Properties of flame-retardant polymer compositions and shaped articles thereof were determined as follows.

(1) Mechanical properties

A dumbbell specimen was prepared by injection molding. Tensile strength at yield point ($kgf/cm^2$) and elongation at break (%) were determined on the specimen according to ASTM D-638.

(2) Limiting oxygen index (LOI)

A strip specimen having a size of 150 mm x 6 mm x 1 mm was prepared from a pellet, and limiting oxygen index (LOI) was determined thereon according to ASTM D-2863. The larger the value of LOI, the higher the flame retardancy.

(3) Flame retardancy

A strip specimen having a size of 127 mm x 12.7 mm x 0.8 mm was prepared from a pellet, and flame retardancy was evaluated on the specimen according to the standard stipulated in UL-94. The flame retardancy was expressed by the following ratings: V-0 (excellent), V-1 (good), V-2 (medium) and HB (poor).

(4) Resistance to hydrolysis

A dumbbell specimen was placed in a thermo-hygrostat maintained at a temperature of 80°C and a relative humidity of 95% for a predetermined time. The molecular weight of the polymer specimen was measured by gel permeation chromatography before and after the placement in the thermohygrostat, and expressed in terms of polystyrene. The change (%) of the molecular weight is a measure for the resistance to hydrolysis.

(5) Crystallization characteristics

Crystallization characteristics were evaluated by the melting temperature (Tm) and crystallization temperature (Tc; temperature as measured upon crystallization from a molten state) of a polyester pellet specimen as measured by a differential scanning calorimeter. Both temperature rise and temperature drop were conducted at a rate of 20°C/min. When the temperature reached the highest temperature, i.e., 260°C, the specimen was maintained at this temperature for 10 minutes, then the temperature was dropped.

Chemical structure, number average molecular weight (Mn) and number average degree of polymerization (Mw) of the aromatic phosphate compounds (A) to (L) used in the examples and comparative examples are as follows.

(A)

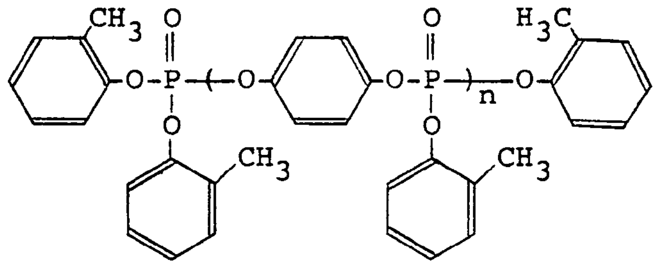

Mn = 600
n = 0.88

(B)

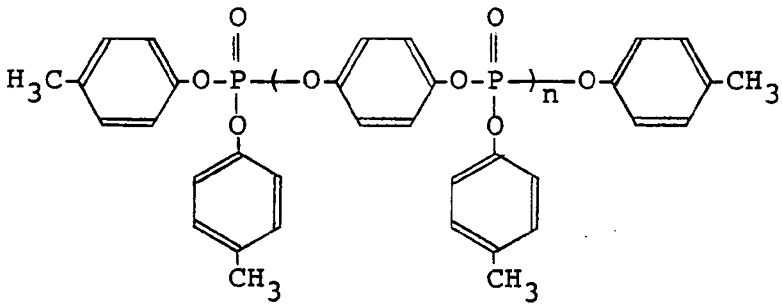

Mn = 680
n = 1.19

(C)

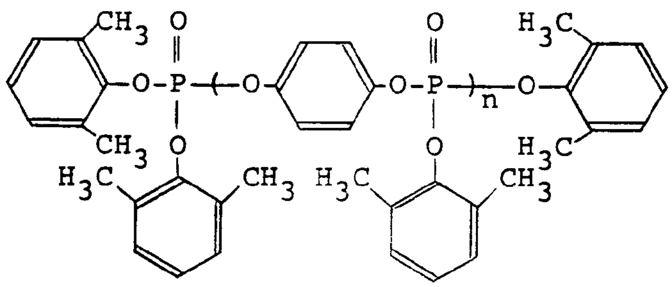

Mn = 720
n = 1.12

(D)

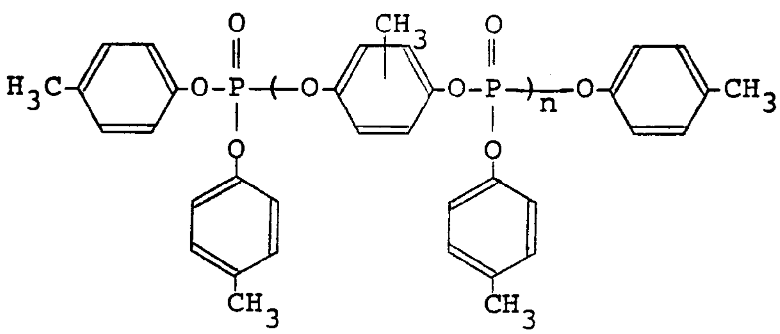

Mn = 700
n = 1.20

(E)

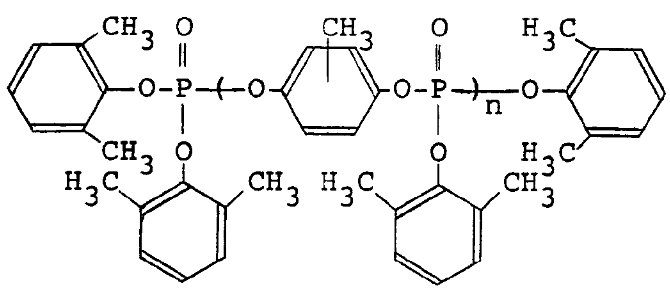

Mn = 810
n = 1.38

(F)

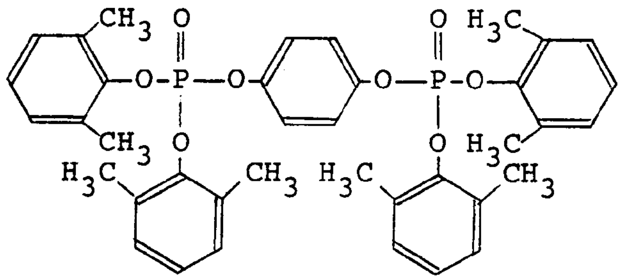

Mn = 687

(G)

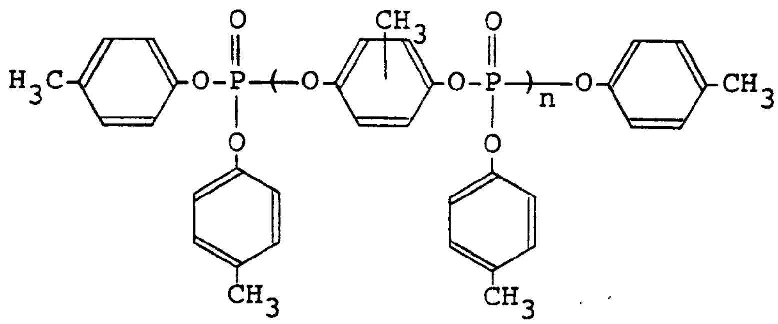

Mn = 3,400

n = 10.98

(H)

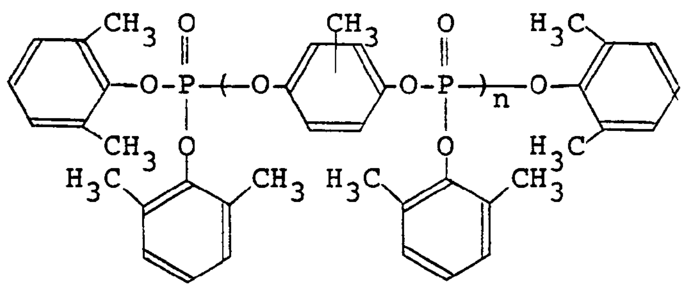

Mn = 25,700

n = 87.13

(I)

Mn = 1,240

n = 1.00

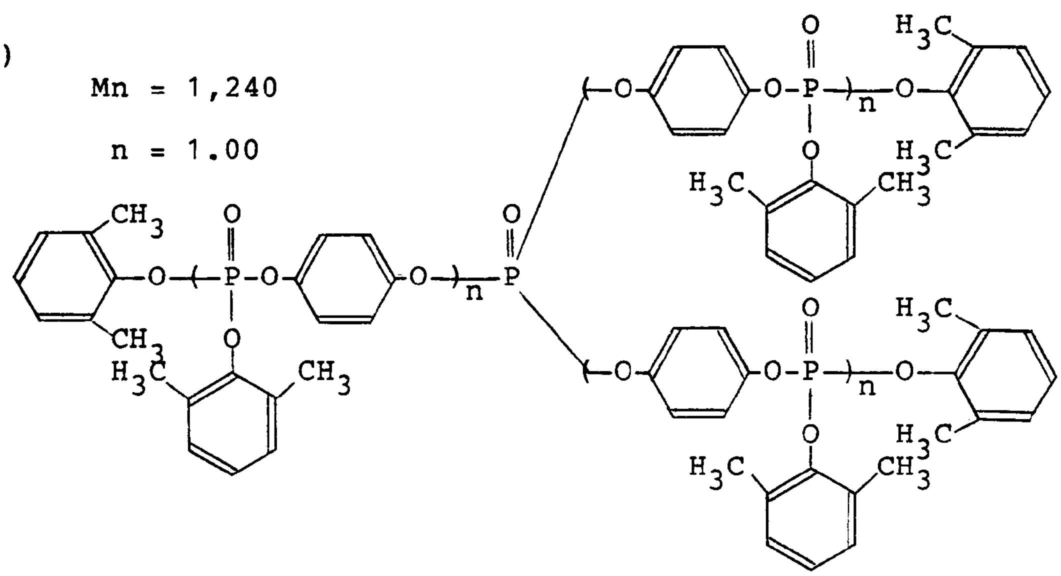

(J)

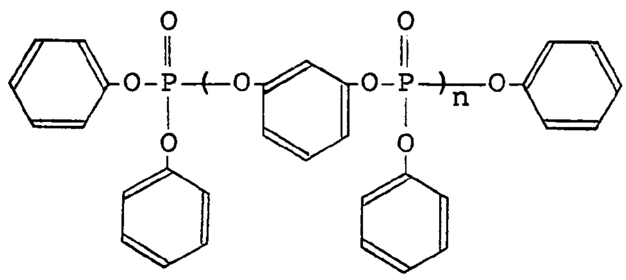

Mn = 580

n = 1.02

(K)

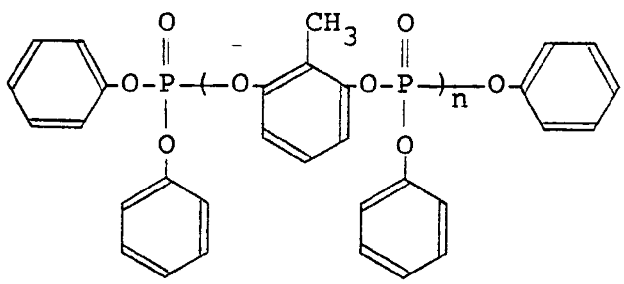

Mn = 600

n = 1.04

(L)

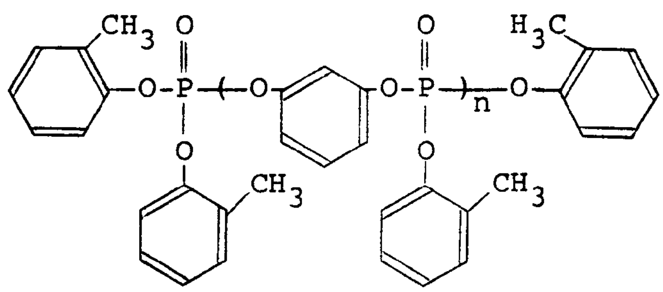

Mn = 660

n = 1.11

The above-recited number average molecular weight (Mn) was determined by using gas permeation chromatography under the following conditions.

Apparatus: Waters, Column: TSK-G2500H/TSK-G4000H, Solvent: N-methyl-pyrrolidone (0.02N lithium chloride), Flow rate: 0.5 ml/min, Detection: UV (260 nm)

Observation of salts of a cyanuric acid used in Examples 3 to 29 and 51 to 86 and Comparative Examples 1 to 25 by an electron microscope revealed that these salts had an average particle diameter (average value of 100 particles) of smaller than 100 µm. Salts of a cyanuric acid used in Examples 28 to 46 had an average particle diameter of larger than 100 µm.

Examples 1 - 23 and Comparative Examples 1 - 16

Various phosphorus-containing compounds, salts of cyanuric acid or isocyanuric acid, an antioxidant (pentaerythrityl-tetrakis[3-(3,5-di-tert-butyl-4-hydroxyphenyl)propionate], "IR-1010" supplied by Ciba-Geigy AG), and glass fiber were mixed, in amounts shown in Tables 2 and 3, together with 100 parts by weight of polybutylene terephthalate (abbreviated to "PBT") having an intrinsic viscosity of 0.85 (as measured at 25°C in an o-chlorophenol solution). The mixture was melt-extruded through a twin-screw extruder having a diameter of 30 mm at a polymer temperature of 260°C to form pellets. The pellets were dried and then injection-molded at a mold temperature of 80°C to prepare a specimen for tensile tests according to ASTM D-638. The pellets were press-molded into stripe specimens for LOI determination and flame retardancy determination according to UL-94.

With regard to the amounts of the aromatic phosphate compounds and phosphorus-containing flame retarders, the amounts of phosphorus contained therein (expressed in % by weight based on the weight of the polymer composition) also recited within parentheses in Tables 2 and 3.

Table 2

| Example No. | Thermoplastic polymer | Aromatic phosphate compound Kind | Aromatic phosphate compound Amount (parts) | Cyanuric acid salt Kind *1 | Cyanuric acid salt Amount (parts) | Amount of antioxidant (parts) | Amount of Glass fiber (parts) |
|---|---|---|---|---|---|---|---|
| Ex 1 | PBT | A | 18.3 (1.5) | - | - | 0.3 | - |
| Ex 2 | PBT | A | 23.8 (1.5) | - | - | 0.3 | 30 |
| Ex 3 | PBT | A | 19.7 (1.5) | Melamine | 8.0 | - | - |
| Ex 4 | PBT | A | 19.8 (1.5) | Melamine | 8.0 | 0.3 | - |
| Ex 5 | PBT | A | 19.7 (1.5) | BG | 8.0 | - | - |
| Ex 6 | PBT | A | 19.8 (1.5) | BG | 8.0 | 0.3 | - |
| Ex 7 | PBT | A | 26.7 (1.5) | Melamine | 16.0 | 0.3 | 30 |
| Ex 8 | PBT | B | 19.2 (1.5) | Melamine | 8.0 | 0.3 | - |
| Ex 9 | PBT | B | 25.9 (1.5) | Melamine | 16.0 | 0.3 | 30 |
| Ex 10 | PBT | C | 21.3 (1.5) | Melamine | 8.0 | 0.3 | - |
| Ex 11 | PBT | C | 28.8 (1.5) | Melamine | 16.0 | 0.3 | 30 |
| Ex 12 | PBT | D | 19.7 (1.5) | Melamine | 8.0 | 0.3 | - |
| Ex 13 | PBT | D | 26.6 (1.5) | Melamine | 16.0 | 0.3 | 30 |
| Ex 14 | PBT | E | 21.4 (1.5) | AG | 8.0 | 0.3 | - |
| Ex 15 | PBT | E | 28.9 (1.5) | AG | 16.0 | 0.3 | 30 |
| Ex 16 | PBT | F | 21.6 (1.5) | Melamine | 8.0 | 0.3 | - |
| Ex 17 | PBT | F | 29.2 (1.5) | Melamine | 16.0 | 0.3 | 30 |
| Ex 18 | PBT | G | 17.3 (1.5) | Melamine | 8.0 | 0.3 | - |
| Ex 19 | PBT | G | 23.3 (1.5) | Melamine | 16.0 | 0.3 | 30 |
| Ex 20 | PBT | H | 17.8 (1.5) | AG | 8.0 | 0.3 | - |
| Ex 21 | PBT | H | 24.1 (1.5) | AG | 16.0 | 0.3 | 30 |
| Ex 22 | PBT | I | 19.1 (1.5) | Melamine | 8.0 | 0.3 | - |
| Ex 23 | PBT | I | 25.8 (1.5) | Melamine | 16.0 | 0.3 | 30 |

Note: *1 Kind of cyanuric acid salts

BG = Benzoguanamine

AG = Acetoguanamine

Table 3

| Comp. Ex. No. | Thermoplastic polymer | Aromatic phosphate compound Kind *2 | Amount (parts) | Cyanuric acid salt Kind *1 | Amount (parts) | Amount of antioxidant (parts) | Amount of Glass fiber (parts) |
|---|---|---|---|---|---|---|---|
| C Ex 1 | PBT | - | - | - | - | - | - |
| C Ex 2 | PBT | - | - | - | - | 0.3 | - |
| C Ex 3 | PBT | - | - | - | - | 0.3 | 30 |
| C Ex 4 | PBT | - | - | Melamine | 8.0 | 0.3 | - |
| C Ex 5 | PBT | - | - | BG | 8.0 | 0.3 | - |
| C Ex 6 | PBT | - | - | AG | 8.0 | 0.3 | - |
| C Ex 7 | PBT | RP | 1.5 (1.5) | - | - | 0.3 | - |
| C Ex 8 | PBT | RP | 2.0 (1.5) | - | - | 0.3 | 30 |
| C Ex 9 | PBT | RP | 1.6 (1.5) | Melamine | 8.0 | 0.3 | - |
| C Ex10 | PBT | RP | 2.1 (1.5) | Melamine | 8.0 | 0.3 | 30 |
| C Ex11 | PBT | J | 17.5 (1.5) | Melamine | 8.0 | 0.3 | - |
| C Ex12 | PBT | J | 23.6 (1.5) | Melamine | 16.0 | 0.3 | 30 |
| C Ex13 | PBT | K | 18.0 (1.5) | Melamine | 8.0 | 0.3 | - |
| C Ex14 | PBT | K | 24.2 (1.5) | Melamine | 16.0 | 0.3 | 30 |
| C Ex15 | PBT | L | 19.3 (1.5) | Melamine | 8.0 | 0.3 | - |
| C Ex16 | PBT | L | 26.1 (1.5) | Melamine | 16.0 | 0.3 | 30 |

Note: *1 Kind of cyanuric acid salts

BG = Benzoguanamine

AG = Acetoguanamine

*2 Kind of aromatic phosphate compounds

RP = Red phosphorus

The results of determination of LOI, flame retardancy, crystallization characteristics, mechanical properties, color tone and resistance to hydrolysis are shown in Tables 4 and 5.

Table 4

| Example No. | LOI | UL-94 | Cryst. charact.*1 | | Mechanical properties*2 | | Color tone | Resistance to hydrolysis *3 | | |
|---|---|---|---|---|---|---|---|---|---|---|
| | | | Tm (°C) | Tc (°C) | Ten St ($kgf/cm^2$) | El (%) | | 0-Hr (%) | 48Hr (%) | 96Hr (%) |
| Ex 1 | 26.4 | V-2 | 221 | 171 | 483 | 52 | White | 100 | 93 | 87 |
| Ex 2 | 25.3 | V-2 | 221 | 170 | 1,252 | 3 | White | 100 | 93 | 88 |
| Ex 3 | 30.3 | V-0 | 220 | 171 | 516 | 13 | White | 100 | 92 | 86 |
| Ex 4 | 30.4 | V-0 | 220 | 171 | 518 | 12 | White | 100 | 94 | 88 |
| Ex 5 | 30.3 | V-0 | 220 | 170 | 517 | 12 | White | 100 | 91 | 83 |
| Ex 6 | 30.3 | V-0 | 219 | 171 | 518 | 14 | White | 100 | 94 | 88 |
| Ex 7 | 30.4 | V-0 | 220 | 171 | 1,321 | 3 | White | 100 | 94 | 89 |
| Ex 8 | 30.5 | V-0 | 219 | 171 | 507 | 9 | White | 100 | 93 | 87 |
| Ex 9 | 30.7 | V-0 | 219 | 171 | 1,302 | 3 | White | 100 | 93 | 88 |
| Ex 10 | 30.7 | V-0 | 220 | 172 | 504 | 9 | White | 100 | 92 | 88 |
| Ex 11 | 30.4 | V-0 | 221 | 171 | 1,297 | 3 | White | 100 | 93 | 87 |
| Ex 12 | 30.8 | V-0 | 220 | 170 | 515 | 12 | White | 100 | 92 | 88 |
| Ex 13 | 30.9 | V-0 | 219 | 171 | 1,268 | 3 | White | 100 | 93 | 88 |
| Ex 14 | 31.0 | V-0 | 220 | 171 | 509 | 10 | White | 100 | 92 | 87 |
| Ex 15 | 30.8 | V-0 | 221 | 171 | 1,275 | 3 | White | 100 | 93 | 87 |
| Ex 16 | 31.0 | V-0 | 220 | 170 | 514 | 11 | White | 100 | 93 | 87 |
| Ex 17 | 31.1 | V-0 | 221 | 171 | 1,280 | 3 | White | 100 | 93 | 87 |
| Ex 18 | 30.8 | V-0 | 220 | 170 | 531 | 12 | White | 100 | 92 | 88 |
| Ex 19 | 30.9 | V-0 | 219 | 171 | 1,306 | 3 | White | 100 | 93 | 88 |
| Ex 20 | 31.0 | V-0 | 220 | 171 | 542 | 16 | White | 100 | 92 | 87 |
| Ex 21 | 30.8 | V-0 | 221 | 171 | 1,321 | 3 | White | 100 | 93 | 87 |
| Ex 22 | 31.0 | V-0 | 220 | 171 | 540 | 16 | White | 100 | 92 | 87 |
| Ex 23 | 30.4 | V-0 | 220 | 170 | 1,311 | 3 | White | 100 | 93 | 87 |

Note: *1 Crystallization characteristics

*2 Mechanical properties

Ten St = Tensile strength at yield point

El = Elongation at break

*3 Resistance to hydrolysis = molecular weight retention (%)

Table 5

| Comp. Exam. No. | LOI | UL-94 | Crystal. charact.*1 | | Mechanical properties*2 | | Color tone | Resistance to hydrolysis *4 | | |
|---|---|---|---|---|---|---|---|---|---|---|
| | | | Tm (°C) | Tc (°C) | Ten St ($kgf/cm^2$) | El (%) | *3 | 0-Hr (%) | 48Hr (%) | 96Hr (%) |
| C Ex 1 | 23.8 | HB | 224 | 182 | 552 | 73 | White | 100 | 97 | 96 |
| C Ex 2 | 23.4 | HB | 225 | 182 | 548 | 74 | White | 100 | 98 | 97 |
| C Ex 3 | 22.7 | HB | 225 | 182 | 1,416 | 4 | White | 100 | 98 | 96 |
| C Ex 4 | 24.6 | HB | 224 | 181 | 613 | 11 | White | 100 | 96 | 92 |
| C Ex 5 | 24.9 | HB | 223 | 181 | 614 | 11 | White | 100 | 95 | 93 |
| C Ex 6 | 27.7 | HB | 222 | 182 | 613 | 12 | White | 100 | 96 | 92 |
| C Ex 7 | 25.1 | HB | 223 | 183 | 386 | 14 | R.Br | 100 | 89 | 83 |
| C Ex 8 | 25.1 | HB | 224 | 181 | 1,072 | 3 | R.Br | 100 | 91 | 85 |
| C Ex 9 | 27.1 | V-2 | 224 | 182 | 361 | 4 | R.Br | 100 | 90 | 82 |
| C Ex 10 | 26.6 | HB | 223 | 182 | 967 | 3 | R.Br | 100 | 88 | 84 |
| C Ex 11 | 29.9 | V-0 | 220 | 172 | 506 | 7 | White | 100 | 68 | 28 |
| C Ex 12 | 30.1 | V-0 | 219 | 171 | 1,283 | 3 | White | 100 | 68 | 27 |
| C Ex 13 | 30.0 | V-0 | 221 | 171 | 506 | 6 | White | 100 | 66 | 24 |
| C Ex 14 | 29.8 | V-0 | 219 | 171 | 1,273 | 3 | White | 100 | 65 | 25 |
| C Ex 15 | 30.1 | V-0 | 219 | 170 | 481 | 7 | White | 100 | 66 | 27 |
| C Ex 16 | 29.8 | V-0 | 219 | 170 | 1,207 | 3 | White | 100 | 66 | 28 |

Note: *1 Crystallization characteristics

*2 Mechanical properties:

Ten St = Tensile strength at yield point

El = Elongation at break

*3 Color tone: R.Br = Reddish brown

*4 Resistance to hydrolysis = molecular weight retention (%)

As seen from comparison of LOI values and flame retardation by Ul-94 of Examples 1 and 2 with those of Comparative Examples 1 - 3, a good flame retardancy is imparted to polyester by incorporation of the specific hydroquinone-type aromatic polyphosphate, and this flame-retardation effect is obtained whether the polyester composition is or is not reinforced with glass fiber.

As seen from comparison of LOI values and flame retardation by UL-94 of Examples 3 - 6, 8, 10, 12, 14, 16, 18, 20 and 22 with those of the comparative examples, a more enhanced flame retardancy is imparted to polyester by incorporation of a combination of the specific hydroquinone-type aromatic polyphosphate with the specific cyanuric acid salt; and, as seen from comparison of LOI values and flame retardation by UL-94 of Examples 7, 9, 11, 13, 15, 17, 19, 21 and 23 with those of the comparative examples, the enhanced flame-retardation effect also is obtained where the polyester composition is reinforced with glass fiber.

Where the specific hydroquinonee-type aromatic polyphosphate and the specific cyanuric acid salt are incorporated in polyester (Examples 3 - 23), the mechanical properties, crystallization characteristics, color tone and resistance to hydrolysis of polyester are reduced only to a minor extent. In contrast, where red phosphorus or a resorcin-type aromatic polyphosphate is incorporated in polyester (Comparative Examples 7 - 16), the mechanical properties, crystallization characteristics, color tone and resistance to hydrolysis of polyester

are reduced to a great extent.

Where only the specific cyanuric acid salt is incorporated in polyester (Comparative Examples 3 - 5), a good flame retardancy cannot be obtained.

Where the specific aromatic polyphosphate is incorporated in polyester, the resistance to hydrolysis of polyester is reduced although to a minor extent (comparison of Examples 3 and 5 with Comparative Example 1), but, where a hindered phenol stabilizer is incorporated in combination with the aromatic polyphosphate, the resistance to hydrolysis of polyester is not reduced but rather enhanced (Examples 4 and 6 ).

Examples 24 - 29 and Comparative Examples 17 - 25

Various phosphorus-containing compounds, salts of cyanuric acid or isocyanuric acid, an antioxidant (pentaerythrityl-tetrakis[3-(3,5-di-tert-butyl-4-hydroxyphenyl)propionate], "IR-1010" supplied by Ciba-Geigy AG), and carbon fiber were mixed, in amounts shown in Table 6, together with 100 parts by weight of the following thermoplastic polymer:

(a) bisphenol A type polycarbonate having a weight average molecular weight of 51,000 as measured by gel permeation chromatography and expressed in terms of polystyrene,

(b) a mixture of poly(2,6-dimethyl-1,4-phenylene)oxide having a weight average molecular weight of 120,000 as measured by gel permeation chromatography and expressed in terms of polystyrene and polystyrene having a weight average molecular weight of 430,000 (mixing ratio of 60/40 by weight; the mixture is hereinafter abbreviated to "modified PPO"), or

(c) nylon 6 having a relative viscosity of 2.70 as measured at 25°C in a solution of 1% by weight of polymer in conc. sulfuric acid.

The mixture was melt-extruded through a twin-screw extruder having a diameter of 30 mm to form pellets. The pellets were dried and then injection-molded to prepare a specimen for tensile tests according to ASTM D-638. The pellets were press-molded into stripe specimens for LOI determination and flame retardancy determination according to UL-94.

With regard to the amounts of the aromatic phosphate compounds and phosphorus-containing flame retarders, the amounts of phosphorus contained therein (expressed in % by weight based on the weight of the polymer composition) also recited within parentheses in Table 6.

The results of determination of LOI, flame retardancy, crystallization characteristics, mechanical properties, color tone and resistance to hydrolysis are shown in Table 7.

Table 6

| Example No. | Thermoplastic polymer *1 | Phosphorus-containing compound Kind *2 | Phosphorus-containing compound Amount (parts) | Cyanuric acid salt Kind | Cyanuric acid salt Amount (parts) | Amount of antioxidant (parts) | Amount of Glass fiber (parts) |
|---|---|---|---|---|---|---|---|
| EX 24 | PC | A | 19.7 (1.5) | Melamine | 8.0 | 0.3 | - |
| Ex 25 | PC | A | 21.6 (1.5) | Melamine | 8.0 | 0.3 | 10 |
| Ex 26 | m-PPO | B | 19.2 (1.5) | Melamine | 8.0 | 0.3 | - |
| Ex 27 | m-PPO | B | 24.5 (1.5) | Melamine | 8.0 | 0.3 | 30 |
| Ex 28 | Nylon 6 | C | 25.3 (1,5) | Melamine | 8.0 | 0.3 | 20 |
| Ex 29 | Nylon 6 | H | 21.1 (1.5) | Melamine | 8.0 | 0.3 | 20 |
| C Ex17 | PC | - | - | - | - | - | - |
| C Ex18 | PC | - | - | Melamine | 8.0 | 0.3 | - |
| C Ex19 | PC | RP | 1.6 (1.5) | Melamine | 8.0 | 0.3 | - |
| C Ex20 | m-PPO | - | - | - | - | - | - |
| C Ex21 | m-PPO | - | - | Melamine | 8.0 | 0.3 | - |
| C Ex22 | m-PPO | RP | 1.6 (1.5) | Melamine | 8.0 | 0.3 | - |
| C Ex23 | Nylon 6 | - | - | - | - | - | - |
| C Ex24 | Nylon 6 | - | - | Melamine | 8.0 | 0.3 | 20 |
| C Ex25 | Nylon 6 | RP | 2.0 (1.5) | Melamine | 8.0 | 0.3 | 20 |

Note: *1 Thermoplastic resin

PC = polycarbonate

m-PPO = modified PPO (mixture of poly(2,6-dimethyl-1,4-phenylene)oxide and polystyrene

*2 Kind of aromatic phosphate compounds

RP = Red phosphorus

Table 7

| Example No. | LOI | UL-94 | Mechanical properties*1 | | Color tone *2 | Resistance to hydrolysis *3 | | |
|---|---|---|---|---|---|---|---|---|
| | | | Ten St (kgf/cm²) | El (%) | | 0-Hr (%) | 100Hr (%) | 200Hr (%) |
| Ex 24 | 31.2 | V-0 | 520 | 11 | White | 100 | 94 | 87 |
| Ex 25 | 30.5 | V-0 | 1,151 | 3 | White | 100 | 93 | 87 |
| Ex 26 | 31.3 | V-0 | 514 | 13 | R.Br | - | - | - |
| Ex 27 | 30.8 | V-0 | 1,161 | 3 | R.Br | - | - | - |
| Ex 28 | 30.7 | V-0 | 1,208 | 9 | White | - | - | - |
| Ex 29 | 30.4 | V-0 | 1,221 | 8 | White | - | - | - |
| C Ex 17 | 28.0 | V-2 | 653 | 119 | White | 100 | 93 | 84 |
| C Ex 18 | 28.6 | V-2 | 710 | 19 | White | 100 | 91 | 83 |
| C Ex 19 | 29.2 | V-1 | 655 | 7 | White | 100 | 85 | 62 |
| C Ex 20 | 25.0 | HB | 557 | 58 | R.Br | - | - | - |
| C Ex 21 | 26.6 | HB | 574 | 8 | Brown | - | - | - |
| C Ex 22 | 28.4 | V-2 | 566 | 4 | R.Br | - | - | - |
| C Ex 23 | 26.8 | HB | 821 | 173 | White | - | - | - |
| C Ex 24 | 26.6 | HB | 1,202 | 4 | White | - | - | - |
| C Ex 25 | 27.1 | HB | 1,200 | 3 | R.Br | - | - | - |

Note: *1 Mechanical properties:
Ten St = Tensile strength at yield point
El = Elongation at break
*2 Color tone: R.Br = Reddish brown
*3 Resistance to hydrolysis = molecular weight retention (%)

As seen from comparison of LOI values and flame retardation by Ul-94 of Examples 24 and 25 with those of Comparative Examples 17, a good flame retardancy is imparted to polycarbonate by incorporation of the specific hydroquinone-type aromatic polyphosphate and the specific cyanuric acid salt, and this flame-retardation effect is obtained whether the polycarbonate composition is or is not reinforced with glass fiber. Where only the specific cyanuric acid salt is incorporated in polyester (Comparative Example 18), a good flame retardancy cannot be obtained. Where red phosphorus is incorporated instead of the aromatic phosphate compound (Comparative Example 19), a good flame retardancy cannot be obtained and the resistance to hydrolysis is reduced.

As seen from comparison of LOI values and flame retardation by Ul-94 of Examples 26 and 27 with those of Comparative Examples 20, a good flame retardancy is imparted to modified PPO resin by incorporation of the specific hydroquinone-type aromatic polyphosphate and the specific cyanuric acid salt, and this flame-retardation effect is obtained whether the modified PPO resin composition is or is not reinforced with glass fiber. Where only the specific cyanuric acid salt is incorporated in modified PPO resin (Comparative Example 21), a good flame retardancy cannot be obtained. Where red phosphorus is incorporated instead of the aromatic phosphate compound (Comparative Example 22), a good flame retardancy cannot be obtained.

As seen from comparison of LOI values and flame retardation by Ul-94 of Examples 28 and 29 with those of Comparative Examples 23, a good flame retardancy is imparted to polyamide by incorporation of the specific

hydroquinone-type aromatic polyphosphate and the specific cyanuric acid salt, and this flame-retardation effect is obtained whether the polyamide composition is or is not reinforced with glass fiber. Where only the specific cyanuric acid salt is incorporated in polyamide (Comparative Example 24), a good flame retardancy cannot be obtained. Where red phosphorus is incorporated instead of the aromatic phosphate compound (Comparative Example 25), a good flame retardancy cannot be obtained.

Examples 30 - 50

The same flame-retardant polymer compositions as those described in Examples 3 to 23 were prepared and their characteristics were evaluated except that cyanuric acid salts having an average particle diameter of larger than 100 μm were used instead of the cyanuric acid salt having an average particle diameter of smaller than 100 μm with all other conditions remaining the same. The results are shown in Table 8.

Table 8

| Example No. | LOI | UL-94 | Cryst. charact.*1 | | Mechanical properties*2 | | Color tone | Resistance to hydrolysis *3 | | |
|---|---|---|---|---|---|---|---|---|---|---|
| | | | Tm (°C) | Tc (°C) | Ten St (kgf/cm²) | El (%) | | 0-Hr (%) | 48Hr (%) | 96Hr (%) |
| Ex 30 | 30.2 | V-0 | 221 | 171 | 505 | 10 | White | 100 | 92 | 85 |
| Ex 31 | 30.3 | V-0 | 220 | 170 | 508 | 9 | White | 100 | 94 | 87 |
| Ex 32 | 30.4 | V-0 | 219 | 170 | 507 | 10 | White | 100 | 91 | 82 |
| Ex 33 | 30.2 | V-0 | 219 | 170 | 508 | 11 | White | 100 | 93 | 88 |
| Ex 34 | 30.5 | V-0 | 221 | 171 | 1,286 | 3 | White | 100 | 94 | 88 |
| Ex 35 | 30.4 | V-0 | 219 | 170 | 496 | 8 | White | 100 | 93 | 87 |
| Ex 36 | 30.6 | V-0 | 218 | 171 | 1,276 | 3 | White | 100 | 93 | 87 |
| Ex 37 | 30.6 | V-0 | 220 | 171 | 494 | 7 | White | 100 | 93 | 88 |
| Ex 38 | 30.3 | V-0 | 219 | 171 | 1,271 | 3 | White | 100 | 93 | 87 |
| Ex 39 | 30.7 | V-0 | 220 | 171 | 505 | 11 | White | 100 | 92 | 87 |
| Ex 40 | 30.8 | V-0 | 219 | 171 | 1,242 | 3 | White | 100 | 93 | 88 |
| Ex 41 | 31.0 | V-0 | 220 | 171 | 499 | 9 | White | 100 | 92 | 88 |
| Ex 42 | 30.7 | V-0 | 220 | 171 | 1,250 | 3 | White | 100 | 93 | 87 |
| Ex 43 | 30.8 | V-0 | 220 | 170 | 495 | 10 | White | 100 | 93 | 87 |
| Ex 44 | 30.9 | V-0 | 219 | 171 | 1,273 | 3 | White | 100 | 93 | 87 |
| Ex 45 | 30.7 | V-0 | 220 | 171 | 520 | 10 | White | 100 | 92 | 87 |
| Ex 46 | 30.8 | V-0 | 219 | 171 | 1,264 | 3 | White | 100 | 93 | 88 |
| Ex 47 | 31.0 | V-0 | 220 | 171 | 531 | 12 | White | 100 | 92 | 88 |
| Ex 48 | 30.7 | V-0 | 220 | 171 | 1,273 | 3 | White | 100 | 93 | 87 |
| Ex 49 | 31.0 | V-0 | 220 | 171 | 520 | 12 | White | 100 | 92 | 88 |
| Ex 50 | 30.4 | V-0 | 220 | 170 | 1,267 | 3 | White | 100 | 93 | 87 |

Note: *1 Crystallization characteristics

*2 Mechanical properties

Ten St = Tensile strength at yield point

El = Elongation at break

*3 Resistance to hydrolysis = molecular weight retention (%)

As seen from the data in Table 8, the polymer compositions prepared by using a cyanuric acid salt having a large average particle diameter exhibit mechanical properties which are deteriorated to some extent as compared with those of the polymer compositions prepared from a cyanuric acid salt having a small average particle diameter. However, the flame retardancy of the former polymer compositions is on the same level as that of the latter polymer compositions.

Examples 51 - 68

Various phosphorus-containing compounds, salts of cyanuric acid or isocyanuric acid, an antioxidant (pentaerythrityl-tetrakis[3-(3,5-di-tert-butyl-4-hydroxyphenyl)propionate], "IR-1010" supplied by Ciba-Geigy AG), and carbon fiber were mixed, in amounts shown in Table 9, together with 100 parts by weight of a polymer mixture composed of (a) the following polybutylene terephthalate and one or two polymers selected from the following polymers (b), (c) and (d).

(a) Polybutylene terephthalate having an intrinsic viscosity of 0.85 as measured on a solution in o-chlorophenol at 25°C.

(b) Phenoxy resin (polycondensate of bisphenol A with epichlorohydrin; abbreviated to "PHE") having a weight average molecular weight of 59,000 as measured by gel permeation chromatography and expressed in terms of polystyrene.

(c) Poly(2,6-dimethyl-1,4-phenylene)oxide (abbreviated to "PPO") having a weight average molecular weight of 120,000 as measured by gel permeation chromatography and expressed in terms of polystyrene.

(d) Polyphenylene sulfide of linear type (abbreviated to "PPS") having a melt viscosity of 800 poise as measured at a temperature of 320°C and a shear rate of 1,000/sec.

The mixture was melt-extruded through a twin-screw extruder having a diameter of 30 mm to form pellets. The pellets were dried and then injection-molded to prepare a specimen for tensile tests according to ASTM D-638. The pellets were press-molded into stripe specimens for LOI determination and flame retardancy determination according to UL-94.

With regard to the amounts of the aromatic phosphate compounds and phosphorus-containing flame retarders, the amounts of phosphorus contained therein (expressed in % by weight based on the weight of the polymer composition) also recited within parentheses in Table 9.

The results of determination of LOI, flame retardancy, crystallization characteristics, mechanical properties, color tone and resistance to hydrolysis are shown in Table 10.

Table 9

| Example No. | Thermoplastic polymer mixture and weight ratio *1 | Phosphorus-containing compound Kind | Phosphorus-containing compound Amount (parts) | Cyanuric acid salt Kind | Cyanuric acid salt Amount (parts) | Amt. of anti-oxidant (parts) | Amt. of glass fiber (parts) |
|---|---|---|---|---|---|---|---|
| Ex 51 | PBT/PHE = 70/30 | A | 19.8 (1.5) | Melamine | 8.0 | 0.3 | - |
| Ex 52 | PBT/PHE = 70/30 | A | 26.7 (1.5) | Melamine | 16.0 | 0.3 | 30 |
| Ex 53 | PBT/PPO = 70/30 | B | 19.2 (1.5) | Melamine | 8.0 | 0.3 | - |
| Ex 54 | PBT/PPO = 70/30 | B | 25.9 (1.5) | Melamine | 16.0 | 0.3 | 30 |
| Ex 55 | PBT/PPS = 70/30 | C | 21.3 (1.5) | Melamine | 8.0 | 0.3 | - |
| Ex 56 | PBT/PPS = 70/30 | C | 28.8 (1.5) | Melamine | 16.0 | 0.3 | 30 |
| Ex 57 | PBT/PHE/PPO = 70/15/15 | D | 17.3 (1.5) | Benzoguanamine | 8.0 | 0.3 | - |
| Ex 58 | PBT/PHE/PPO = 70/15/15 | D | 23.3 (1.5) | Benzoguanamine | 16.0 | 0.3 | 30 |
| Ex 59 | PBT/PHE/PPS = 70/15/15 | E | 17.8 (1.5) | Acetoguanamine | 8.0 | 0.3 | - |
| Ex 60 | PBT/PHE/PPS = 70/15/15 | E | 24.1 (1.5) | Acetoguanamine | 16.0 | 0.3 | 30 |
| Ex 61 | PBT/PHE/PPO/PPS = 70/10/10/10 | F | 21.6 (1.5) | Melamine | 8.0 | 0.3 | - |
| Ex 62 | PBT/PHE/PPO/PPS = 70/10/10/10 | F | 29.2 (1.5) | Melamine | 16.0 | 0.3 | 30 |
| Ex 63 | PBT/PHE/PPO = 70/15/15 | G | 17.3 (1.5) | Benzoguanamine | 8.0 | 0.3 | - |
| Ex 64 | PBT/PHE/PPO = 70/15/15 | G | 23.3 (1.5) | Benzoguanamine | 16.0 | 0.3 | 30 |
| Ex 65 | PBT/PHE/PPS = 70/15/15 | H | 17.8 (1.5) | Acetoguanamine | 8.0 | 0.3 | - |
| Ex 66 | PBT/PHE/PPS = 70/15/15 | H | 24.1 (1.5) | Acetoguanamine | 16.0 | 0.3 | 30 |
| Ex 67 | PBT/PPO = 70/30 | I | 19.1 (1.5) | Melamine | 8.0 | 0.3 | - |
| Ex 68 | PBT/PPO = 70/30 | I | 25.8 (1.5) | Melamine | 16.0 | 0.3 | 30 |

Note: *1 Thermoplastic polymer

PBT = polybutylene terephthalate

PHE = phenoxy resin

PPO = poly(2,6-dimethyl-1,4-phenylene)oxide

PPS = polyphenylene sulfide

Table 10

| Example No. | LOI | UL-94 | Mechanical properties*1 Ten St (kgf/cm²) | El (%) | Color tone *2 | Resistance to hydrolysis *3 0-Hr (%) | 100Hr (%) | 200Hr (%) |
|---|---|---|---|---|---|---|---|---|
| Ex 51 | 30.8 | V-0 | 542 | 19 | White | 100 | 94 | 87 |
| Ex 52 | 31.3 | V-0 | 1,387 | 3 | White | 100 | 95 | 88 |
| Ex 53 | 30.9 | V-0 | 532 | 21 | L.Br | 100 | 94 | 87 |
| Ex 54 | 30.9 | V-0 | 1,367 | 3 | L.Br | 100 | 93 | 88 |
| Ex 55 | 31.1 | V-0 | 529 | 19 | White | 100 | 93 | 88 |
| Ex 56 | 31.2 | V-0 | 1,362 | 3 | White | 100 | 94 | 87 |
| Ex 57 | 30.9 | V-0 | 562 | 24 | White | 100 | 93 | 87 |
| Ex 58 | 31.3 | V-0 | 1,394 | 3 | White | 100 | 94 | 88 |
| Ex 59 | 30.8 | V-0 | 534 | 21 | White | 100 | 93 | 88 |
| Ex 60 | 31.0 | V-0 | 1,339 | 3 | White | 100 | 94 | 88 |
| Ex 61 | 31.1 | V-0 | 540 | 22 | White | 100 | 94 | 87 |
| Ex 62 | 31.3 | V-0 | 1,344 | 3 | White | 100 | 93 | 87 |
| Ex 63 | 30.9 | V-0 | 540 | 22 | White | 100 | 93 | 87 |
| Ex 64 | 31.3 | V-0 | 1,331 | 3 | White | 100 | 94 | 88 |
| Ex 65 | 30.8 | V-0 | 589 | 27 | White | 100 | 93 | 88 |
| Ex 66 | 31.0 | V-0 | 1,404 | 3 | White | 100 | 94 | 88 |
| Ex 67 | 31.3 | V-0 | 525 | 20 | L.Br | 100 | 94 | 87 |
| Ex 68 | 30.9 | V-0 | 1,362 | 3 | L.Br | 100 | 93 | 88 |

Note: *1 Mechanical properties:
Ten St = Tensile strength at yield point
El = Elongation at break
*2 Color tone: L.Br = Light brown
*3 Resistance to hydrolysis = molecular weight retention (%)

As seen from the LOI values and flame retardation by Ul-94 of Examples 51, 53, 55, 57, 59, 61, 63, 65 and 67, a good flame retardancy is imparted to a polyblend composed of a polyester and one or more polymers selected from a phenoxy resin, poly(2,6-dimethyl-1,4-phenylene)oxide (PPO) and polyphenylene sulfide (PPS) by incorporation of the specific hydroquinone-type aromatic polyphosphate and the specific cyanuric acid salt, and further, as seen from the data in Examples 52, 54, 56, 58, 60, 62, 64, 66 and 68, this flame-retardation effect is obtained whether the polymer composition is or is not reinforced with glass fiber.

As seen from comparison of LOI values and flame retardation by Ul-94 of Examples 4 and 6 - 23 with those of Examples 51 - 68, polyblends composed of a polyester and one or more polymers selected from a phenoxy resin, PPO and PPS are superior to a polyester alone in the flame retardancy and mechanical properties of their compositions having incorporated therein the specific aromatic polyphosphate and the specific cyanuric acid salt.

Examples 69 - 86

The same flame-retardant polymer compositions as those described in Examples 51 to 68 were prepared and their characteristics were evaluated except that 0.3 part by weight of a polytetrafluoroethylene powder (Polyfron MPA FA-100 supplied by Daikin Ind. Ltd.) was further incorporated in each flame-retardant polymer composition with all other conditions remaining the same. The evaluation results are shown in Table 11.

Table 11

| Example No. | LOI | UL-94 | Mechanical properties*1 Ten St ($kgf/cm^2$) | Mechanical properties*1 El (%) | Color tone *2 | Resistance to hydrolysis *3 0-Hr (%) | Resistance to hydrolysis *3 100Hr (%) | Resistance to hydrolysis *3 200Hr (%) |
|---|---|---|---|---|---|---|---|---|
| Ex 69 | 31.4 | V-0 | 549 | 21 | White | 100 | 94 | 88 |
| Ex 70 | 31.5 | V-0 | 1,395 | 3 | White | 100 | 95 | 89 |
| Ex 71 | 31.3 | V-0 | 539 | 22 | L.Br | 100 | 94 | 88 |
| Ex 72 | 31.2 | V-0 | 1,382 | 3 | L.Br | 100 | 93 | 88 |
| Ex 73 | 31.3 | V-0 | 536 | 21 | White | 100 | 93 | 88 |
| Ex 74 | 31.5 | V-0 | 1,370 | 3 | White | 100 | 94 | 88 |
| Ex 75 | 31.4 | V-0 | 571 | 25 | White | 100 | 93 | 88 |
| Ex 76 | 31.5 | V-0 | 1,403 | 3 | White | 100 | 94 | 88 |
| Ex 77 | 31.6 | V-0 | 542 | 23 | White | 100 | 93 | 87 |
| Ex 78 | 31.2 | V-0 | 1,343 | 3 | White | 100 | 94 | 88 |
| Ex 79 | 31.5 | V-0 | 550 | 24 | White | 100 | 94 | 88 |
| Ex 80 | 31.7 | V-0 | 1,351 | 3 | White | 100 | 94 | 87 |
| Ex 81 | 31.4 | V-0 | 547 | 23 | White | 100 | 93 | 88 |
| Ex 82 | 31.5 | V-0 | 1,340 | 3 | White | 100 | 94 | 88 |
| Ex 83 | 31.6 | V-0 | 601 | 30 | White | 100 | 93 | 87 |
| Ex 84 | 31.2 | V-0 | 1,415 | 3 | White | 100 | 94 | 88 |
| Ex 85 | 31.4 | V-0 | 537 | 22 | L.Br | 100 | 94 | 88 |
| Ex 86 | 31.1 | V-0 | 1,380 | 3 | L.Br | 100 | 93 | 88 |

Note: *1 Mechanical properties:
Ten St = Tensile strength at yield point
El = Elongation at break
*2 Color tone: L.Br = Light brown
*3 Resistance to hydrolysis = molecular weight retention (%)

As seen from Table 11, the flame-retardant polymer compositions of Examples 69 - 86 exhibited an excellent flame retardancy of V-0 level. When these polymer compositions were subjected to a burning test, dripping of a molten polymer was not observed. The mechanical properties and color tone of shaped articles, and the resistance to hydrolysis of these polymer compositions were approximately the same as those of Examples 51 - 68.

From the above-mentioned factual data, the following will be seen.

(1) Flame-retardant polymer compositions embodying the present invention having incorporated therein the hydroquinone-type aromatic oligophosphate or polyphosphate exhibit a good flame-retardant effect as compared with the compositions containing the conventional phosphorus-containing flame reterder. Where the specific salt of cyanuric acid or isocyanuric acid is incorporated in combination with the hydroquinone-type aromatic oligo-phosphate or polyphosphate, the flame-retardant effect is more enhanced. The flame-retardant polymer composition of the present invention exhibits a good resistance to hydrolysis and the good characteristics of the thermoplastic polymer are not deteriorated by the incorporation of the hydroquinone-type aromatic oligophosphate or polyphosphate.

(2) Polymer compositions embodying the present invention have good mechanical properties, melt-flowability, resistance to hydrolysis and surface appearance, as well as good flame retardancy. Therefore, the polymer compositions are useful for mechanical parts, electrical and electronic parts, and automobile parts.

(3) Various shaped articles including injection-molded articles and film, sheet and other extrusion-shaped articles, which exhibit good flame-retardancy, resistance to hydrolysis and other properties, can be made from polymer compositions embodying the present invention.

## Claims

1. A flame-retardant polymer composition comprising a thermoplastic polymer and a flame retarder having a chemical structure represented by the following formula (1):

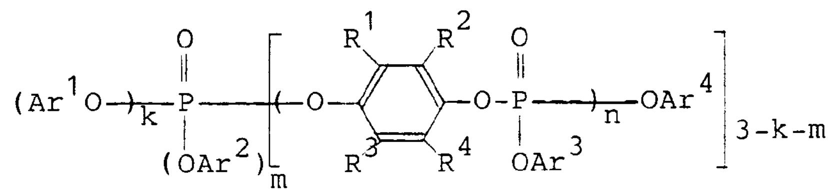

(1)

wherein $R^1$, $R^2$, $R^3$ and $R^4$ independently represent a hydrogen atom or an alkyl group having 1 to 5 carbon atoms, $Ar^1$, $Ar^2$, $Ar^3$ and $Ar^4$ independently represent a phenyl group or a phenyl group having an organic residue substituent containing no halogen, n is a number average degree of polymerization and in the range of 0.5 to 3,000, and each of k and m from O to 2 and the sum of k and m is in the range of 0 to 2.

2. A flame-retardant polymer composition according to claim 1, wherein each of k and m in the formula (1) is 1.

3. A flame-retardant polymer composition according to claim 1 or claim 2, wherein $Ar^1$, $Ar^2$, $Ar^3$ and $Ar^4$ in the formula (1) independently represent a phenyl, tolyl or xylyl group.

4. A flame-retardant polymer composition according to claim 1, wherein the flame retarder has a chemical structure represented by the following formula (2):

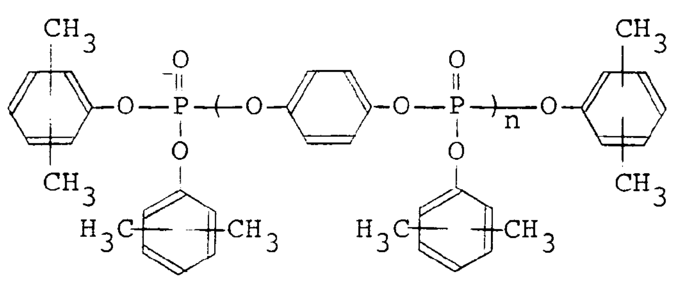

(2)

wherein n is a number average degree of polymerization and in the range of 0.5 to 3,000.

5. A flame-retardant polymer composition according to any one of claims 1 to 4, wherein n in the formula (1) is a number in the range of 1 to 2.5.

6. A flame-retardant polymer composition according to any one of claims 1 to 4, wherein n in the formula (1) is a number in the range of 6 to 100.

7. A flame-retardant polymer composition according to any preceding claim, wherein the amount of the flame retarder having a chemical structure of the formula (1) is 0.5 to 100 parts by weight per 100 parts by weight of the thermoplastic polymer.

8. A flame-retardant polymer composition according to any preceding claim, wherein the thermoplastic polymer is a thermoplastic polyester.

9. A flame-retardant polymer composition according to any one of claims 1 to 7, wherein the thermoplastic polymer is a mixture comprising a thermoplastic polyester and at least one thermoplastic polymer selected from a phenoxy resin, a polyphenylene oxide, a modified polyphenylene oxide and polyphenylene sulfide.

10. A flame-retardant polvmer composition according to any preceding claim, which further comprises a salt of a triazine derivative represented by the following formula (3):

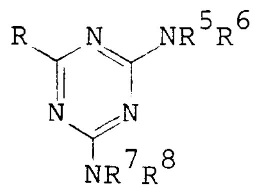

(3)

with at least one acid selected from cyanuric acid and isocyanuric acid; wherein $R^5$, $R^6$, $R^7$ and $R^8$ independently represent a hydrogen atom, an aryl, alkyl, aralkyl or cycloalkyl group, or $-CONH_2$; and R represents the same group as $-NR^5R^6$ or $-NR^7R^8$, or independently represents a hydrogen atom, an aryl, alkyl, aralkyl or cycloalkyl group, or $-NH_2$ or $-CONH_2$.

11. A flame-retardant polymer composition according to claim 10, wherein the amount of the salt of a triazine derivative of the formula (3) with at least one acid of cyanuric acid and isocyanuric acid is 0.5 to 100 parts by weight per 100 parts by weight of the thermoplastic polymer.

12. A flame-retardant polymer composition according to claim 10 or claim 11, wherein the salt of a triazine derivative of the formula (3) with at least one acid of cyanuric acid and isocyanuric acid in the polymer composition is a finely divided particulate material having an average particle diameter of not larger than 100 μm.

13. A flame-retardant polymer composition according to any one of claims 10 to 12, wherein the triazine derivative of the formula (3) is melamine.

14. A flame-retardant polymer composition according to any preceding claim, which further comprises a fluoro-polymer in an amount of 0.01 to 10 parts by weight per 100 parts by weight of the thermoplastic polymer.

15. A flame-retardant polymer composition according to any preceding claim, which further comprises a hindered phenol stabilizer in an amount of 0.01 to 3 parts by weight per 100 parts by weight of the thermoplastic polymer.

16. A flame-retardant polymer composition according to any preceding claim, which further comprises a filler in an amount of 5 to 140 parts by weight per 100 parts by weight of the thermoplastic polymer.

17. A shaped article made of a flame-retardant polymer composition comprising a thermoplastic polymer and a flame retarder having a chemical structure represented by the following formula (1):

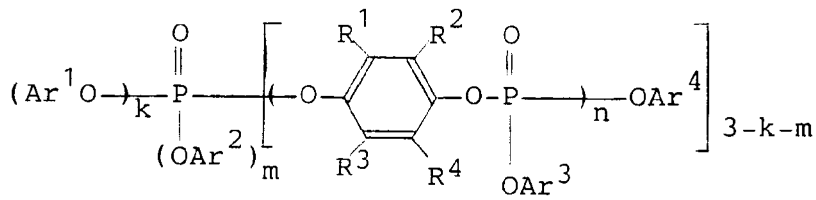

(1)

wherein $R^1$, $R^2$, $R^3$ and $R^4$ independently represent a hydrogen atom or an alkyl group having 1 to 5 carbon atoms, $Ar^1$, $Ar^2$, $Ar^3$ and $Ar^4$ independently represent a phenyl group or a phenyl group having an organic residue substituent containing no halogen, n is a number average degree of polymerization and in the range of 0.5 to 3,000, and each of k and m is from 0 to 2 and the sum of k and m is in the range of 0 to 2.

**18.** A shaped article according to claim 17, which is an injection-molded article.

**19.** A shaped article according to claim 17, which is a film or sheet.

European Patent Office

# EUROPEAN SEARCH REPORT

Application Number
EP 95 30 1685

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-5 278 212 (NISHIHARA HAJIME ET AL) 11 January 1994<br>* abstract; claims; examples *<br>* column 9, line 55 - line 66 *<br>* column 24, line 1 - line 26 *<br>--- | 1-5,7-19 | C08K5/523 |
| X | EP-A-0 386 916 (POLYPLASTICS CO) 12 September 1990<br>* abstract; claims; examples; tables *<br>* page 4, line 29 - page 5, line 53 *<br>--- | 1-9, 14-19 | |
| X | US-A-5 122 556 (KAMBOUR ROGER P) 16 June 1992<br>* abstract; claims; examples *<br>* column 5, line 25 - column 6, line 26 *<br>--- | 1-5,7,8, 17-19 | |
| D,X | GB-A-1 405 983 (MITSUBISHI RAYON CO) 10 September 1975<br>* claims; examples 3,6,9 *<br>--- | 1-8,17 | |
| D,X | DE-A-27 01 493 (ICI LTD) 21 July 1977<br>* claims; examples 6,7 *<br>* page 7, paragraph 2 - paragraph 3 *<br>----- | 1-5,7,8, 17-19 | TECHNICAL FIELDS SEARCHED (Int.Cl.6)<br>C08K |

The present search report has been drawn up for all claims

| Place of search | Date of completion of the search | Examiner |
|---|---|---|
| THE HAGUE | 15 June 1995 | Mettler, R-M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)